Europäisches Patentamt

European Patent Office

Office européen des brevets

(11) Publication number: **0 442 494 A2**

# EUROPEAN PATENT APPLICATION

(21) Application number: **91102096.4**

(51) Int. Cl.5: **G11B 11/10**

(22) Date of filing: **14.02.91**

(30) Priority: **16.02.90 JP 33683/90**

(43) Date of publication of application:
**21.08.91 Bulletin 91/34**

(84) Designated Contracting States:
**DE FR GB NL**

(71) Applicant: **MITSUBISHI PLASTICS INDUSTRIES LIMITED**
**2-5-2, Marunouchi, Chiyoda-ku**
**Tokyo 100(JP)**

(72) Inventor: **Aritake, Toshiyuki, c/o Hiratsuka Plant**
**Mitsubishi Plastics Ind.Ltd., 2480 Shindo**
**Hiratsuka-shi, Kanagawa(JP)**
Inventor: **Nagao, Hiroyuki, c/o Hiratsuka Plant**
**Mitsubishi Plastics Ind.Ltd., 2480 Shindo**
**Hiratsuka-shi, Kanagawa(JP)**
Inventor: **Takaki, Yasuhiro, c/o Hiratsuka Plant**
**Mitsubishi Plastics Ind.Ltd., 2480 Shindo**
**Hiratsuka-shi, Kanagawa(JP)**
Inventor: **Yamada, Shingetsu, c/o Hiratsuka Plant**
**Mitsubishi Plastics Ind.Ltd., 2480 Shindo**
**Hiratsuka-shi, Kanagawa(JP)**

(74) Representative: **Vossius & Partner**
**Siebertstrasse 4 P.O. Box 86 07 67**
**W-8000 München 86(DE)**

(54) **Magneto-optical recording medium.**

(57) A magneto-optical recording medium has an interference layer of bi-layer structure formed on a transparent substrate (1) and a recording layer (4) on the interference layer. Of the interference layers, the first unit layer (2) which directly contacts the substrate has a thickness $t_1$ and is made of $SiO_x$ and the second unit layer (3) formed on the first unit layer (2) has a thickness of $t_2$ and is made of $SiO_y$ wherein x is within a range $0 \leq x \leq 0.4$; y is within a range from 0.4 to 1.0; and $t_1$ and $t_2$ satisfy a relation $0.1 \leq t_1/(t_1 + t_2) \leq 0.5$. The provision of the interference layer of a bi-layer structure improves characteristics and reliability of the magneto-optical recording medium.

FIG.1

The present invention relates to a magneto-optical recording medium which can be used in a magneto-optical memory, magnetic recording device, display device or the like. More particularly, the present invention relates to a magneto-optical recording medium in which information can be recorded and from which the recorded information can be read out making use of magneto-optical effects such as magnetic Kerr effect and Faraday effect.

Magneto-optical memory has received much attention as a memory which can record a large amount of information in a high density and from which the information can be read out in a high speed. A recording medium for such a magneto-optical memory as described above has a recording layer which is provided with a magnetic film of a rare earth-transient metal amorphous alloy with vertical magnetization such as TbFeCo alloy disclosed in, for example, U. S. Patent No. 4,670,353. Further, this type of recording medium has a transparent dielectric layer between the substrate and the recording layer as an interference layer for enhancing Kerr effect or Faraday effect. There interference layer is made of SiO or SiN. U. S. Patent No. 4,661,420 discloses a magneto-optical recording medium having as an interference layer a layer made of Si, Ge or its alloy to which is added one of H, C, F, N and O.

However, when an SiO film is formed on the substrate to a thickness within the range of 600 to 1,500 Å by sputtering or vacuum deposition, cracks tend to occur on the SiO film or pinholes tend to be formed due to adhesion failure between the substrate and SiO film. This increases considerably the byte error rate of the recorded information and hence impairs the reliability of the magneto-optical recording medium. In order to overcome this defect, it has been tried to control the oxygen ratio in the interference layer. More specifically, the use of silicon oxide represented by SiOx wherein x < 0.4 as the interference layer improves adhesion between the interference layer and the substrate and anticrack property. However, a problem arises that C/N (carrier to noise ratio) upon reproduction decreases.

It is an object of the present invention to solve the above-described disadvantages of the prior art and provide a magneto-optical recording medium having an interference layer having a good adhesion to the substrate and a high anticrack property as well as having a high C/N upon reproduction.

In order to achieve the above object of the present invention, in one aspect of the invention, there is provided a magneto-optical recording medium comprising:

a transparent substrate;

a first dielectric layer of a thickness of $t_1$ formed on the transparent substrate and made of SiOx wherein x is within a range from 0 to 0.4;

a second dielectric layer of a thickness of $t_2$ formed on the first dielectric layer and made of SiOy wherein y is within a range from 0.4 to 1.0; and

a magneto-optical recording layer formed on the second dielectric layer;

wherein the thickness $t_1$ and $t_2$ satisfy a relation $0.1 \leq t_1/(t_1 + t_2) \leq 0.5$.

Here, x may be in the range of $0.1 \leq x \leq 0.4$.

Sum of the thickness $t_1$ of the first dielectric layer and the thickness $t_2$ of the second dielectric layer may be no smaller than 400Å and no larger than 1,000Å.

The magneto-optical recording layer may be made of a rare earth-transient metal alloy.

In another aspect of the invention, there is provided a magneto-optical recording medium comprising:

a first magneto-optical recording medium element including:

a first transparent substrate;

a first dielectric layer of a thickness of $t_1$ formed on the first transparent substrate and made of SiOx wherein x is within a range from 0 to 0.4;

a second dielectric layer of a thickness of $t_2$ formed on the first dielectric layer and made of SiOy wherein y is within a range from 0.4 to 1.0;

a first magneto-optical recording layer formed on the second dielectric layer; and

a first protective layer formed on the magneto-optical recording layer;

wherein the thicknesses $t_1$ and $t_2$ satisfy a relation $0.1 \leq t_1/(t_1 + t_2) \leq 0.5$;

a second magneto-optical recording medium element including:

a second transparent substrate;

a third dielectric layer of a thickness of $t_3$ formed on the second transparent substrate and made of SiOx wherein x is within a range from 0 to 0.4;

a fourth dielectric layer of a thickness of $t_4$ formed on the third dielectric layer and made of SiOy wherein y is within a range from 0.4 to 1.0;

a second magneto-optical recording layer formed on the fourth dielectric layer; and

a second protective layer formed on the second magneto-optical recording layer;

wherein the thicknesses $t_3$ and $t_4$ satisfy a relation $0.1 \leq t_3/(t_3 + t_4) \leq 0.5$; and

an adhesive layer bonding the first and second magneto-optical recording medium elements in such a manner that the first and second protective layers are opposing to each other.

The above and other objects, effects, features and advantages of the present invention will become more apparent from the following description of embodiments thereof taken in conjunction with the accompanying drawings.

Fig. 1 is a schematic cross sectional view showing an embodiment of the magneto-optical recording medium according to the present invention; and

Fig. 2 is a partially cutaway view in perspective showing another embodiment of the magneto-optical recording medium according to the present invention.

The magneto-optical recording medium according to the present invention has an interference layer of a bi-layer structure including two unit layers made of silicon oxides having different oxygen contents and being different in major functions from each other.

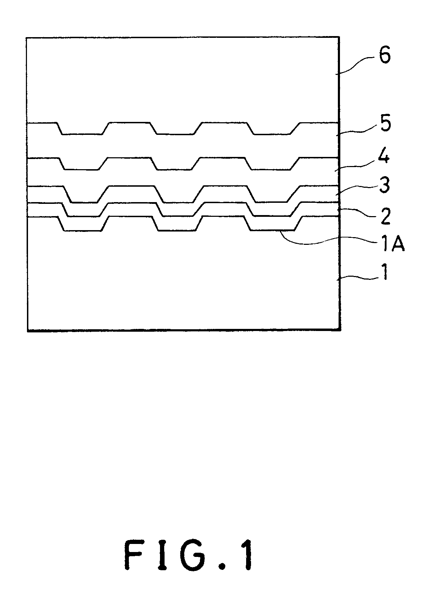

Fig. 1 shows a laminate structure of an embodiment of the magneto-optical recording medium of the present invention. As illustrated in Fig. 1, the magneto-optical recording medium includes a transparent substrate 1 on whioh an $SiO_x$ film as first dielectric layer 2, an $SiO_y$ film as a second dielectric layer 3, a recording layer 4, an $SiO_z$ protective layer 5 and a resin protective layer 6 are formed in this order. The first dielectric layer 2 ($SiO_x$ film) and the second dielectric layer 3 ($SiO_y$ film) together form an interference layer. The former mainly has a function to give adhesion to the substrate 1 while the latter has a function of mainly enhancing Kerr effect or Faraday effect.

The magneto-optical recording medium of the present invention was prepared as follows. That is a polycarbonate substrate 1 having a diameter of 130 mm which was formed therein with a spiral groove 1A having a width of 0.6 $\mu$m, a depth of 700Å and a pitch of 1.6 $\mu$m was set in a vacuum vessel. After evacuating the vessel to a pressure of about $10^{-7}$ Torr, argon and oxygen, each of a purity of 99.999%, were introduced therein and an $SiO_x$ film 2 and an $SiO_y$ film 3 were formed on the substrate by high frequency magnetron sputtering method using a single crystalline silicon of a purity of 99.999% as a target to form a bi-layer interference film. Then, a magneto-optical recording film 4 composed of $Tb_{24}Fe_{63}Co_{13}$ was formed on the interference film by direct current magnetron sputtering method. On the recording film 4 was formed an $SiO_z$ ($z \leq 1.0$) film having a thickness of about 1,000Å as a protective film 5 and an ultraviolet ray curing resin was coated thereon to a thickness of about 20 $\mu$m using a spin coater and cured with ultraviolet ray to form a protective layer 6.

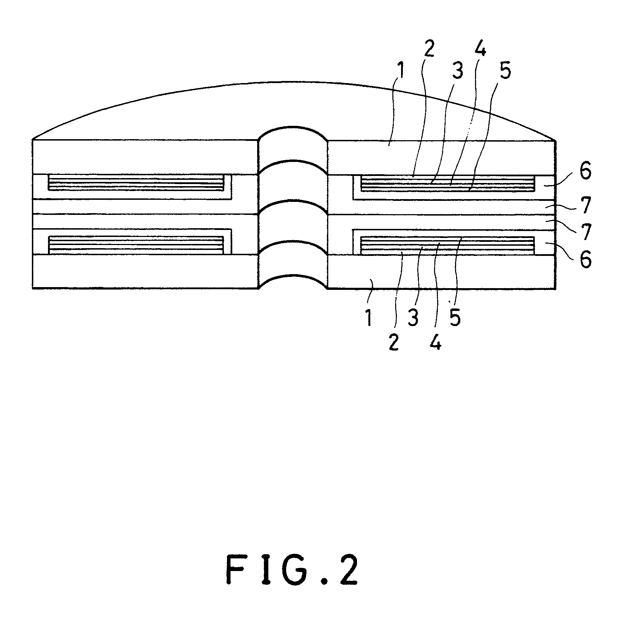

As shown in Fig. 2, two magneto-optical disc media thus prepared were each coated with a hot-melt type adhesive 7 to a thickness about 50 $\mu$m using a roll coater and the media were bonded to each other so that the coated surfaces can oppose each other, thus preparing a double sided disc. A reflection layer made of, for example, aluminum or the like may be provided between the $SiO_z$ film 5 and the resin protective layer 6.

In the compositions of the two interference films, i.e., $SiO_x$ and $SiO_y$, the values of x and y can each be controlled by adjusting the partial pressures of argon and oxygen.

The deposition rates of the $SiO_x$ and $SiO_y$ layers are determined depending upon the sputtering conditions, mainly on the sputtering power and the partial pressure of argon gas used. Accordingly, if the deposition rate has been obtained in advance from the thickness of a layer deposited by sputtering performed under predetermined conditions for a predetermined time, then the thickness of a deposited layer can be controlled by controlling the deposition time. To note, the measurement of the film thicknesses on the order of nanometers (nm) is possible by the use of a thin film thickness meter with a diamond needle (e.g., DEKTAK 3030 made by SLOAN) recently prevailing.

Various samples were prepared with varied compositions and thicknesses of two films, and they were measured on C/N upon reproduction and subjected to durability test. The results obtained are shown in Table 1.

For the measurement of C/N, an evaluation device according to ISO/IEC DP10089-1 was used. Signals were recorded at a position at a diameter of 30 mm under conditions of a disc rotation of 1,800 rpm, a recording frequency of 3.7 MHz and a pulse width of 60 nsec using optimum recording power, and reproduced with laser power of 1.5 mW, followed by measuring C/N using a spectrum analyzer.

The durability test was conducted using a thermo-hygrostat kept at 70°C and 85% RH (relative humidity). The discs were each held vertically in the thermo-hygrostat so that no excess strain could be applied thereto, and their appearances after 2,000 hours were evaluated visually.

Table 1

| Sample No. | SiO$_x$ | | SiO$_y$ | | C/N (dB) | C/N Improving Effect (dB) (based on No.2) | After Aging 70°C x 85% 2,000 Hr |
|---|---|---|---|---|---|---|---|
| | x | Thickness (Å) | y | Thickness (Å) | | | |
| 1 | 0.18 | 800 | — | 0 | 43.0 | −1.5 | No change |
| 2 | 0.33 | 800 | — | 0 | 44.5 | 0 | No change |
| 3 | 0.33 | 640 | 0.43 | 160 | 44.6 | +0.1 | No change |
| 4 | 0.33 | 480 | 0.43 | 320 | 44.7 | +0.2 | No change |
| 5 | 0.33 | 400 | 0.43 | 400 | 45.1 | +0.6 | No change |
| 6 | 0.33 | 320 | 0.43 | 480 | 45.3 | +0.8 | No change |
| 7 | 0.33 | 160 | 0.43 | 640 | 46.0 | +1.5 | No change |
| 8 | 0.33 | 80 | 0.43 | 720 | 46.3 | +1.8 | No change |
| 9 | — | 0 | 0.43 | 800 | 46.6 | +2.1 | Cracks occurred in the mirror surface portion |
| 10 | 0.18 | 160 | 0.43 | 640 | 45.8 | +1.3 | No change |
| 11 | 0.10 | 80 | 0.43 | 720 | 46.2 | +1.7 | No change |
| 12 | 0.33 | 400 | 1.00 | 400 | 45.2 | +0.7 | No change |
| 13 | 0.33 | 400 | 1.20 | 400 | 44.9 | +0.4 | Cracks occurred in the mirror surface portion |
| 14 | 0.33 | 160 | 0.43 | 140 | 46.1 | +1.6 | Pinholes occurred |
| 15 | 0.33 | 160 | 0.43 | 240 | 46.2 | +1.7 | No change |
| 16 | 0.33 | 100 | 0.43 | 900 | 45.9 | +1.4 | No change |
| 17 | 0.33 | 80 | 0.43 | 1120 | 45.7 | +1.2 | Cracks occurred in the mirror surface portion |

For analyzing the compositions of the interference films, etching of the film surface was performed using an analyzer (ESCA5100 type produced by Perkin-Elmer Co.) and atomic ratio of Si and O were measured and the state of the occurrence of silicon was examined. As a result, it revealed that ratios of silicon which is in the form of Si, SiO and SiO$_2$ vary depending upon the value of x of SiO$_x$ and the proportion of oxygen which is not bonded to Si also varies. Table 2 shows the results. When x increases-the

4

ratio of silicon which exists as Si decreases and the effect of trapping $O_2$ decreases. This suggests that if the value of x of the dielectric layer $SiO_x$ is overly large its protective effect decreases.

Table 2

| | Occurrence of Silicon (%) | | | Proportion of Oxygen |
|---|---|---|---|---|
| x | Si | SiO | $SiO_2$ | Not Bonded to Silicon (%) |
| 0.30 | 63 | 30 | 7 | 3 |
| 0.72 | 45 | 30 | 25 | 10 |

Explanation will be made on the results of the measurements shown in Table 1. In Table 1, samples Nos. 1, 2 and 9 are magneto-optical recording media having an interference film of a single layer structure. Sample No. 9 has the same meaning as that x of SiOx is 0.43 and the thickness is 800 Å.

As can be seen from Table 1, those samples which had improved C/N and showed good durability test results are sample Nos. 5, 6, 7, 8, 10, 11, 12, 15 and 16. Sample Nos. 2 and 3 showed good durability test results but their C/N improvement was poor.

At first, x and y of the first layer $SiO_x$ and of the second layer $SiO_y$, respectively, will be considered. Those samples which had good C/N and good durability all fall within the ranges of $0 \leq x \leq 0.4$, and $0.4 \leq y \leq 1.00$. If $x > 0.4$ as sample No. 9, adhesion to the substrate is poor and cracks tend to occur in the mirror surface portion (flat portion other than the groove). On the other hand, if $y > 1.00$, the film became stiff and fragile and therefore cracks tend to occur as sample No. 13.

Next, relation between the film thickness $t_1$ of the first layer $SiO_x$ and the film thickness $t_2$ of the second layer $SiO_y$ will be described. The relation of thicknesses of $t_1$ of the $SiO_x$ and $t_2$ of $SiO_y$ films, relative to the above-described samples that show good results are within the range of $0.1 \leq t_1/(t_1 + t_2) \leq 0.5$. If this value $(t_1/(t_1 + t_2))$ is larger than 0.5, C/N shows almost no improvement as samples Nos. 3 and 4 and if it is smaller than 0.1, the first layer exhibits no effect, thus lacking sufficient durability similarly to the mono-layer sample No. 9.

Finally, total thickness of the interference layer will be described. The total film thickness of the interference layer, which is a sum of the thicknesses of the first layer $SiO_x$ and the second layer $SiO_y$, is preferably within the range of 400 to 1,000Å as shown in Table 1. If the total film thickness is less than 400 Å, protective effect is insufficient and pinholes tend to occur as in sample No. 14, and if it is more than 1,000Å, the inner strain of the film grows large, resulting in that cracks tend to occur as sample No. 17.

The recording layer formed on the interference layer of a bi-layer structure according to the present invention is not limited to $Tb_{23}Fe_{63}Co_{13}$ but various alloys can be used whose examples include Tb-Fe-Co alloys which can be usually used, alloys obtained by adding one or more other metals to such Tb-Fe-Co alloys, rare earth-transient metal alloys obtained by replacing Tb in such Tb-Fe-Co alloys by Nd, Dy or Gd. The materials of the inorganic protective layer 5 and of the organic protective layer 6 are not limited to those exemplified in the above-described example. It is clear that the magneto-optical recording medium of the present invention may be of mono-plate type instead of the above-exemplified bonded type.

As described above, because of the bi-layer structure of the interference layer, the magneto-optical recording medium of the present invention has good adhesion between the substrate and the interference film which has not been obtained by the prior art recording medium as well as improved C/N. Durability of 2,000 hours corresponds to assurance of reliability for about 10 years. Therefore, according to the present invention, magneto-optical recording medium having a high reliability and excellent characteristics can be obtained.

The present invention has been described in detail with respect to preferred embodiments, and it will now be apparent from the foregoing to those skilled in the art that changes and modifications may be made without departing from the invention in its broader aspects, and it is the invention, therefore, in the appended claims to cover all such changes and modifications as fall within the true spirit of the invention.

**Claims**

5

1. A magneto-optical recording medium characterized by comprising:

a transparent substrate;

a first dielectric layer of a thickness of $t_1$ formed on said transparent substrate and made of SiOx wherein x is within a range from 0 to 0.4;

a second dielectric layer of a thickness of $t_2$ formed on said first dielectric layer and made of SiOy wherein y is within a range from 0.4 to 1.0; and

a magneto-optical recording layer formed on said second dielectric layer;

wherein said thicknesses $t_1$ and $t_2$ satisfy a relation $0.1 \leq t_1/(t_1 + t_2) \leq 0.5$

2. A magneto-optical recording medium as claimed in Claim 1, characterized in that x is within a range from 0.1 to 0.4.

3. A magneto-optical recording medium as claimed in Claim 1 or 2, characterized in that sum of the thickness $t_1$ of said first dielectric layer and the thickness $t_2$ of said second dielectric layer is no smaller than 400Å and no larger than 1,000Å.

4. A magneto-optical recording medium as claimed in Claim 1, 2, or 3, characterized in that said magneto-optical recording layer is composed of a rare earth-transient metal alloy.

5. A magneto-optical recording medium characterized by comprising:

a first magneto-optical recording medium element including:

a first transparent substrate;

a first dielectric layer of a thickness of $t_1$ formed on said first transparent substrate and made of SiOx wherein x is within a range from 0 to 0.4;

a second dielectric layer of a thickness of $t_2$ formed on said first dielectric layer and made of SiOy wherein y is within a range from 0.4 to 1.0;

a first magneto-optical recording layer formed on said second dielectric layer; and

a first protective layer formed on said magneto-optical recording layer;

wherein said thicknesses $t_1$ and $t_2$ satisfy a relation $0.1 \leq t_1/(t_1 + t_2) \leq 0.5$;

a second magneto-optical recording medium element including:

a second transparent substrate;

a third dielectric layer of a thickness of $t_3$ formed on said second transparent substrate and made of SiOx wherein x is within a range from 0 to 0.4;

a fourth dielectric layer of a thickness of $t_4$ formed on said third dielectric layer and made of SiOy wherein y is within a range from 0.4 to 1.0;

a second magneto-optical recording layer formed on said fourth dielectric layer; and

a second protective layer formed on said second magneto-optical recording layer;

wherein said thicknesses $t_3$ and $t_4$ satisfy a relation $0.1 \leq t_3/(t_3 + t_4) \leq 0.5$; and        an adhesive layer bonding said first and second magneto-optical recording medium elements in such a manner that said first and second protective layers are opposing to each other.

6

5

4

3

2

1A

1

# FIG.1

# FIG.2